# EUROPEAN PATENT APPLICATION

(11) **EP 1 614 983 A2**
(43) Date of publication of application: **11.01.2006**
(21) Application number: 05270009.3
(22) Date of filing: 12.04.2005
(51) Int. Cl.: F25B 49/02, F25B 31/00

(54) **Air conditioner**

(30) Priority: 29.06.2004 KR 2004192136
(71) Applicant: SAMSUNG ELECTRONICS CO., LTD., Suwon-city, Gyeonggi-do (KR)
(72) Inventor: Kaneko, Takashi Samsung Yokohama Res. Inst. Co.Ltd, Ku Yokohama-Shi Kanagawa-Ken Kanagawa (JP); Kusaka, Michiyoshi Samsung Yok. Res. Inst.Co.Ltd, Yokohama-Shi Kanagawa-ken Kanagawa (JP); Jung, Gyoo Ha Samsung Elec. Co.Ltd, Yeogtong-Gu Suwon-Si Gyeonggi-Do (KR); Song, Myung Seob Samsung Elec. Co. Ltd Digital, Yeongton-Gu Suwon-Si Gyeonggi-Do (KR)
(74) Representative: Grey, Ian Michael

(57) **Abstract**

An air conditioner comprising a main compressor (3) and an auxiliary compressor (16) connected in parallel and together operable to compress refrigerant and supply it to a refrigeration circuit is disclosed. The auxiliary compressor (16) is configured to operate when the load placed on the main compressor (3) reaches a predetermined level. A bypass conduit (26) communicates the main (3) and auxiliary (16) compressors and a valve (27) is disposed in the bypass conduit (26) to selectively allow refrigerant and/or lubricating fluid to flow from the auxiliary compressor (16) into the main compressor (3).

## Description

The present invention relates to an air conditioner comprising a main compressor and an auxiliary compressor connected in parallel and together operable to compress refrigerant and supply it to a refrigeration circuit, the auxiliary compressor being configured to operate when the load placed on the main compressor reaches a predetermined level.

An example of an air conditioner for a room is one in which a plurality of high pressure shell type compressors are connected in parallel. One of the plurality of compressors is a variable speed compressor and at least one of the remaining compressors is a constant speed compressor.

When an air conditioner with the above mentioned arrangement performs air conditioning for a room, the variable speed compressor is continuously operated and if necessary at least one constant speed compressor is additionally operated to maintain the room air at a pleasant temperature and humidity. A problem with such an air conditioner is that when the variable speed compressor is operated, and the constant speed compressor is maintained in a stopped state, the internal pressure of the constant speed compressor shell is higher than the suction pressure of the constant speed compressor (reaching a saturated pressure at ambient temperature or the discharge pressure of the various speed compressor). This may cause an increase in motor torque in the constant speed compressor when it is operated due to the pressure difference, when the constant speed compressor is operated, so that over-current may flow through the constant speed compressor, thereby causing the constant speed compressor to operate abnormally.

Additionally, when the variable speed compressor performs a high capacity operation, the amount of oil discharged together with the refrigerant is increased. The oil discharged from the respective compressors combines and is then distributed into respective compressors by a liquid separator or suction tubes. As a result, oil is introduced even into the constant speed compressor. Therefore, the amount of oil discharged from the variable speed compressor is larger than the amount of oil obtained by the variable speed compressor. If this process continues for a prolonged period of time, the amount of oil in the variable speed compressor will be reduced to an insufficient level.

An air conditioner is proposed in Japanese Patent Laid-open Publication No. Sho. 64-70657 in which the variable speed compressor is operated at minimal capacity for approximately 1 minute before the constant speed compressor is operated in addition to the variable speed compressor, so as to reduce the differential pressure established across the constant speed compressor's compression chamber.

In an air conditioner with the above mentioned arrangement, an increase in motor torque does not occur when the constant speed compressor operates because it is possible to reduce the differential pressure established across the compression chamber of the constant speed compressor when the constant speed compressor operates. In this case, it is possible to prevent the constant speed compressor from operating abnormally due to over current. In this air conditioner, a bypass tube is connected between the bottom of a shell of the constant speed compressor and the bottom of a shell of the variable speed compressor. Accordingly, there is no phenomenon that the amount of oil in the variable speed compressor is short, even when the variable speed compressor and constant speed compressor operate simultaneously in a parallel manner.

However, the air conditioner having the above mentioned arrangement has a problem in that degradation in cooling/heating capacity may occur temporarily because the variable speed compressor is operated at minimal capacity for a predetermined time before the constant speed compressor operates, in accordance with lowering of the operating frequency of the variable speed compressor.

The present invention has been made in view of the above mentioned problems and an aspect of the invention is to provide an air conditioner which is capable of preventing a constant speed compressor from operating abnormally when the constant speed compressor operates in addition to a variable speed compressor, preventing the temperature of air discharged from an indoor unit installed in a room from increasing in a cooling mode or from decreasing in a heating mode, thereby maintaining the room in a pleasant state, and preventing shortages of oil in the variable speed compressor during a high capacity operation of the variable speed compressor thereby achieving the high capacity operation in a stable state.

The present invention seeks to provide a system which overcomes or substantially alleviates the problems discussed above.

An air conditioner according to the present invention is characterised by a bypass conduit communicating the main and auxiliary compressors and a valve disposed in the bypass conduit to selectively allow refrigerant and/or lubricating fluid to flow from the auxiliary compressor into the main compressor.

In a preferred embodiment, the air conditioner includes control means for controlling operation of the main and auxiliary compressors and the valve.

Preferably, the control means is operable to open the valve for a predetermined period of time when the load placed on the main compressor reaches said predetermined level and to initiate operation of the auxiliary compressor after said predetermined time has elapsed.

The control means may be operable to stop operation of the auxiliary compressor after the main and auxiliary compressors have been running for a second predetermined period of time. The control means may also be configured to open the valve for another predetermined period of time before reinitiating operation of the auxiliary compressor.

Embodiments of the present invention will now be described, by way of example only, with reference to the accompanying drawings, in which:
Figure 1 is a schematic view illustrating an air conditioner according to any embodiment of the present invention;
Figure 2 is a flow chart illustrating a control algorithm for an oil equalizing operation carried out when a constant speed compressor in the air conditioner operates; and
Figure 3 is a flow chart illustrating a control algorithm for an oil equalizing operation carried out when the air conditioner operates in a parallel manner.

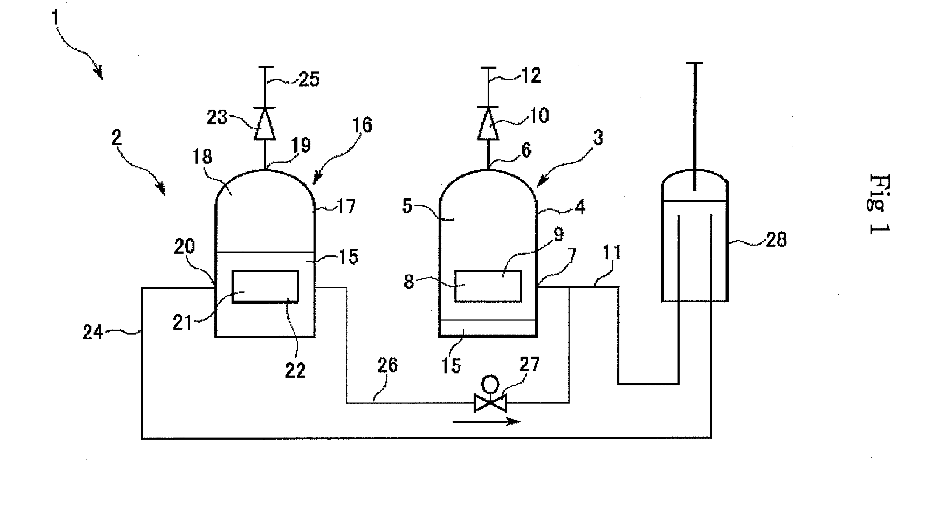

Referring to the drawings, there is shown in Figure 1 an air conditioner 1 in which a plurality of high pressure shell type compressors are arranged. In the illustrated case, the air conditioner 1 includes a variable speed compressor 3, a constant speed compressor 16, a heat exchanger (not shown), and a liquid separator 28. The operation of the air conditioner 1 is controlled through a controller (not shown).

The variable speed compressor 3 includes a high pressure shell 4, a compressor body 8, and a drive motor 9. A compression chamber 5 is defined in the shell 4 and an outlet 6 is formed at a top portion of the shell 4 to communicate the interior of the compression chamber 5 with the exterior of the compression chamber 5. The outlet 6 is connected to a discharge tube 12 through a check valve 10, so that refrigerant can only flow in a direction from the outlet 6 to the discharge tube 12 via the check valve 10.

An inlet 7 is formed at one side of a lower portion of the high pressure shell 4. The inlet 7 is connected to the liquid separator 28 via a suction tube 11, so that refrigerant from the liquid separator 28 is sucked into the compression chamber 5 via the suction tube 11 and inlet 7.

The constant speed compressor 16 is adapted to operate, if necessary, in addition to the variable speed compressor 3 when a room is air conditioned by the air conditioner. The constant speed compressor 16 includes a high pressure shell 17, a compressor body 21 and a drive motor 22. A compression chamber 18 is defined in the shell 17 and an outlet 19 is formed at a top portion of the shell 17 to communicate the interior of the compression chamber 18 with the exterior of the compression chamber 18. The outlet 19 is connected to a discharge tube 25 through a check valve 23, so that refrigerant can only flow in a direction from the outlet 19 to the discharge tube 25 via the check valve 23.

An inlet 20 is formed at one side of a lower portion of the high pressure shell 17. The inlet 20 is connected to the liquid separator 28 via a suction tube 24, so that refrigerant from the liquid separator 28 is sucked into the compression chamber 18 via the suction tube 24 and inlet 20.

A certain amount of lubricant oil 15 is filled in the interior of each of the compression chambers 5 and 18 to lubricate the compressor bodies 8 and 21.

For each of the compressor bodies 8 and 21, for example, a rotary tube compressor may be used. The compressor bodies 8 and 21 compress refrigerant.

The liquid separator 28 collects refrigerant from the heat exchanger and discharges only gaseous refrigerant into the variable speed compressor 3. That is, the liquid separator 28 prevents the compressor body 8 from being over loaded due to compression of liquid state refrigerant.

The variable speed compressor 3 and constant speed compressor 16 are arranged in parallel in the refrigerant circuit of the air conditioner. Refrigerant discharged from the discharge tube 12 and refrigerant discharged from the discharge tube 25 are combined and then introduced into the refrigerant circuit to pass through a cooling or heating cycle such as a heat exchanger (not shown). The refrigerant emerging from the refrigerant circuit is introduced into the liquid separator 28 and is then branched again into suction tube 11 and suction tube 24.

The suction tube 11 of the shell 4 included in the variable speed compressor 3 and the suction tube 24 of the shell 17 included in the constant speed compressor 16 are connected by a bypass tube 26. An electromagnetic pressure/oil equalizing valve (opening/closing valve) 27 is arranged in an intermediate portion of the bypass tube 26. When the pressure/oil equalizing valve 27 is opened, the suction tube 11 of the variable speed compressor 3 is communicated with the compression chamber 18 of the constant speed compressor 16, so that refrigerant and lubricant oil 15 can flow from the compression chamber 18 of the constant speed compressor 16 to the compression chamber 5 of the variable speed compressor 3. When the pressure/oil equalizing valve 27 is closed, the flow of the lubricant oil 15 is cut off.

The constituent elements of the air conditioner are controlled by a controller (not shown). That is, the controller controls operations of constituent elements of the outdoor unit 2 and an indoor unit. When it is desired to additionally operate the constant speed compressor 16 during a continuous operation of the variable speed compressor 3, the controller also controls the pressure/oil equalizing valve 27 to be opened for a predetermined time (for example 10 to 30 seconds) before controlling the constant speed compressor 16 to operate, thereby controlling the flow of refrigerant between the suction tube 11 of the variable speed compressor 3 and the compression chamber 18 of the constant speed compressor 16.

When the surplus amount of lubricant oil 15 is increased due to continuous parallel operations of the variable speed compressor 3 and constant speed compressor 16 for about 2 to 3 hours (T), the constant speed compressor 16 is stopped for a predetermined time (for example 30 to 60 seconds) under the control of the controller (not shown). Simultaneously, the pressure/oil equalizing valve 27 is opened, so that the surplus amount of lubricant oil 15 accumulated in the constant speed compressor 16 is moved toward the variable speed compressor 3 via the bypass tube 26. As a result, a sufficient amount of lubricant oil 15 is secured in the variable speed compressor 3. Thus, it is possible to prevent shortages of lubricant oil 15 in the variable speed compressor 3.

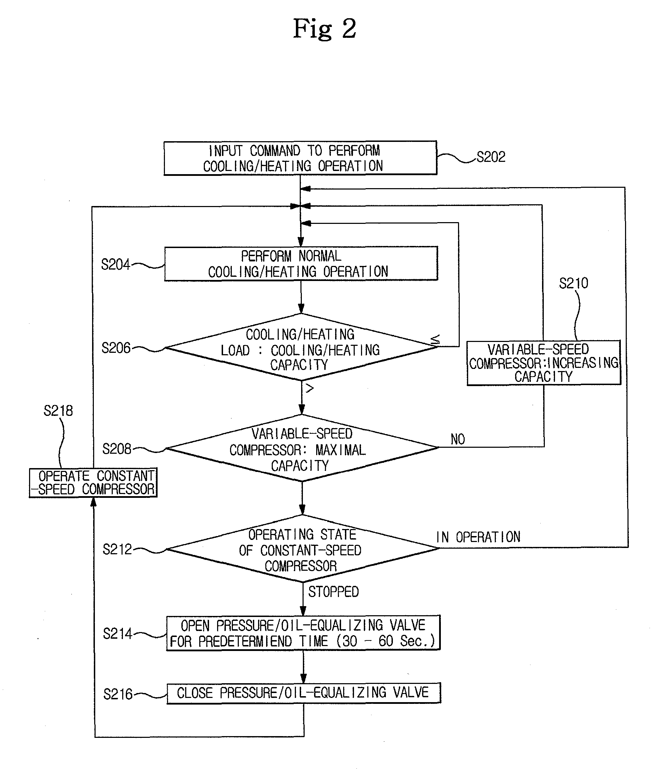

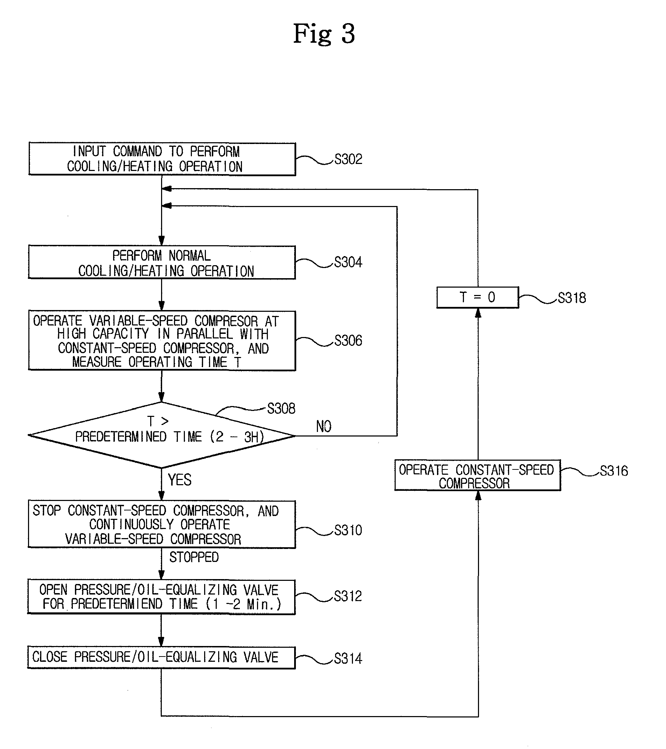

Hereinafter, operation of the air conditioner 1 based on controlled operations of the variable speed compressor 3, constant speed compressor 16 and pressure/oil equalizing valve 27 will be described with reference to Figures 1, 2 and 3.

First, the operation of the air conditioner 1 carried out when the operation mode of the air conditioner 1 is changed from an operation mode, in which only the variable speed compressor 3 operates, to an operation mode, in which the variable speed compressor 3 and constant speed compressor 16 operate in parallel, will be described.

The user first switches on a power switch (not shown) of the air conditioner 1, and then inputs a command to operate the air conditioner 1 (S202). In response to the command, a normal cooling/heating operation of the air conditioner 1 is begun (S204).

The current cooling/heating load is then compared with the cooling/heating capacity of the air conditioner 1 (S206). When the cooling/heating load does not exceed the cooling/heating capacity (cooling/heating load ≤ cooling/heating capacity) that is, when the cooling/heating load can be sufficiently treated with the cooling/heating capacity of the variable speed compressor 3 alone, the normal cooling/heating operation is continuously carried out (S204). That is, only the variable speed compressor 3 operates continuously.

On the other hand, when the cooling/heating load exceeds the cooling/heating capacity (cooling/heating load > cooling/heating capacity), that is, when the cooling/heating capacity of the variable speed compressor is insufficient to treat the cooling/heating load, it is detected whether the variable speed compressor 3 operates at maximal capacity (S208).

When it is detected that the variable speed compressor 3 does not operate at the maximal capacity (NO), the normal cooling/heating operation is continuously carried out under the condition in which the cooling/heating capacity of the variable speed compressor 3 is increased (S204).

When it is detected that the variable speed compressor 3 operates at the maximal capacity (YES), it is detected whether or not the constant speed compressor 16 is in a stopped state (S212). If the constant speed compressor 16 is in operation, the normal cooling/heating operation is continuously carried out (S204).

But, if the constant speed compressor 16 is in a stopped state, the pressure/oil equalizing valve 27 is opened for a predetermined time (30 to 60 seconds) (S225) and is then closed (S227).

When the pressure/oil equalizing valve 27 is maintained in an opened state for the predetermined time (30 to 60 seconds) (S225), refrigerant in the shell 17 of the constant speed compressor 16 is moved into the shell 3 of the variable speed compressor 3, so that the internal pressure of the shell 17 in the constant speed compressor 16 is rendered equal to the pressure of the suction tube 24.

Thereafter, the pressure/oil equalizing valve 27 is closed (S216) and operation of the constant speed compressor 16 is begun (S218). Thus, the normal cooling/heating operation S204 is continuously carried out.

Second, the operation of the air conditioner 1 carried out when the variable speed compressor 3 operates at a high capacity in parallel with the constant speed compressor 16 will be described.

The user first switches on a power switch (not shown) of the air conditioner 1 and then inputs a command to operate the air conditioner 1 (S302). In response to the command, a normal cooling/heating operation of the air conditioner 1 is begun (S304).

Subsequently, a time T for which the variable speed compressor 3 operates continuously at a high capacity in parallel with the constant speed compressor 16 is measured using a timer (not shown) or the like (S306).

The measured time T is then compared with a predetermined time (about 2 to 3 hours) (S308). The normal cooling/heating operation is continued until the time T reaches the predetermined time.

When the time T exceeds the predetermined time, the constant speed compressor 16 is stopped under the condition in which the variable speed compressor 3 still operates (310).

The pressure/oil equalizing valve 27 is then opened for a predetermined time (30 to 60 seconds) in the stopped state of the constant speed compressor 16 (S312). As a result, a surplus amount of lubricant oil 15 in the shell 17 of the constant speed compressor 16 is moved into the shell 4 of the variable speed compressor 3 via the bypass tube 26.

Thereafter, the pressure/oil equalizing valve 27 is closed (S314) and operation of the constant speed compressor 16 is begun (S316). Simultaneously, the time T is reset to "O" (S318) to again measure the operating time. Under this condition, the normal cooling/heating operation S204 is continuously carried out (S304).

When the constant speed compressor 16 is additionally operated during a high capacity operation of the variable speed compressor 3 so that the compressors 3 and 16 operate in parallel for a prolonged period of time (for example 2 to 3 hours), the controller executes a control operation for execution of an oil equalizing operation to stop the operation of the constant speed compressor 16 for a predetermined time (for example 1 to 2 minutes) and simultaneously to open the pressure/oil equalizing valve 27. In accordance with the air conditioner 1 of the illustrated embodiment, the pressure/oil equalizing valve 27 is opened for the predetermined time when the constant speed compressor 16 operates. Accordingly, refrigerant in the shell 17 of the constant speed compressor 16 is moved into the shell 4 of the variable speed compressor 3via the bypass tube 26 so that the internal pressure of the shell 17 in the constant speed compressor 16 is reduced to the pressure of the suction tube 24. Thus, there is no differential pressure between the shell 17 and the suction tube 24. Accordingly, it is possible to prevent the constant speed compressor 16 from operating abnormally due to over current.

It is also unnecessary to reduce the cooling/heating capacity of the variable speed compressor 3 when the constant speed compressor 16 operates. Accordingly, it is possible to air condition the room in a pleasant state.

Since the lubricant oil 15 flows through the bypass tube 26 between the suction tube 11 connected to the compression chamber 5 of the variable speed compressor 3 and the compression chamber 18 of the constant speed compressor 16, a surplus amount of lubricant oil 15 in the compression chamber 18 of the constant speed compressor 16 is moved into the compression chamber 5 of the variable speed compressor 3. Accordingly, it is possible to prevent shortages of lubricant oil 15 in the compression chamber 5 of the variable speed compressor 3.

Since the surplus amount of lubricant oil 15 in the constant speed compressor 16 is moved to the variable speed compressor 3 during a high capacity operation of the variable speed compressor 3 to prevent shortages of lubricant oil 15 in the variable speed compressor 3, the high capacity operation can be stably carried out.

Although the time T, for which the variable speed compressor 3 and constant speed compressor 16 operate continuously in parallel is set to 2 to 3 hours the time for which the pressure/oil equalizing valve 27 is opened before operation of the constant speed compressor 16 is begun, is set to 10 to 30 seconds and the time for which the constant speed compressor 16 is stopped during the parallel operation is set to 30 to 60 seconds in the illustrated embodiment the set values may be changed.

Although the case using two compressors has been described in conjunction with the illustrated embodiment of the present invention, the number of compressors is not limited to two. Three or more compressors may be used.

Also the compressor body of each compressor may be of any type, for example, a reciprocation type, a rotary type or a scroll type.

As apparent from the above description, in the air conditioner of the present invention, the opening/closing valve is opened for a predetermined time by the controller when the constant speed compressor operates, so that the internal pressure of the shell in the constant speed compressor is reduced to the suction pressure of the constant speed compressor. Accordingly, an increase in motor torque does not occur in the constant speed compressor when the constant speed compressor operates so that it is possible to prevent the constant speed compressor from operating abnormally. It is also unnecessary to reduce the cooling/heating capacity of the variable speed compressor when the constant speed compressor operates. Accordingly, it is possible to air condition the room in a pleasant state. Also, there is no phenomenon that the amount of lubricant oil in the variable speed compressor is short, even when the variable speed compressor operates at a high capacity in parallel with the constant speed compressor for a prolonged period of time. Accordingly, the high capacity operation can be carried out in a stable state.

Although a few embodiments of the present invention have been shown and described, it will be appreciated by those skilled in the art that changes may be made in these embodiments without departing from the principles of the invention, the scope of which is defined in the appended claims and their equivalents and the foregoing description should be regarded as a description of a preferred embodiment only.

## Claims

1. An air conditioner comprising a main compressor and an auxiliary compressor connected in parallel and together operable to compress refrigerant and supply it to a refrigeration circuit, the auxiliary compressor being configured to operate when the load placed on the main compressor reaches a predetermined level, **characterised by** a bypass conduit communicating the main and auxiliary compressors and a valve disposed in the bypass conduit to selectively allow refrigerant and/or lubricating fluid to flow from the auxiliary compressor into the main compressor.

2. An air conditioner according to claim 1, comprising control means for controlling operation of the main and auxiliary compressors and the valve.

3. An air conditioner according to claim 2, wherein the control means is operable to open the valve for a predetermined period of time when the load placed on the main compressor reaches said predetermined level and to initiate operation of the auxiliary compressor after said predetermined time has elapsed.

4. An air conditioner according to claim 2 or claim 3, wherein the control means is operable to stop operation of the auxiliary compressor after the main and auxiliary compressors have been running for a second predetermined period of time, the control means also being configured to open the valve for another predetermined period of time before reinitiating operation of the auxiliary compressor.

5. A method of controlling an air conditioner comprising a main compressor and an auxiliary compressor connected in parallel and together operable to compress refrigerant and supply it to a refrigeration circuit, the auxiliary compressor being configured to operate when the load placed on the main compressor reaches a predetermined level, a bypass conduit communicating the main and auxiliary compressors and a valve disposed in the bypass conduit, the method including the step of selectively controlling the valve to allow refrigerant and/or lubricating fluid to flow from the auxiliary compressor into the main compressor.

6. A method according to claim 5, including the step of opening the valve for a predetermined period of time when the load placed on the main compressor reaches said predetermined level and initiating operation of the auxiliary compressor after said predetermined time has elapsed.

7. A method according to claim 6, wherein the method includes the step of stopping operation of the auxiliary compressor after the main and auxiliary compressors have been running for a second predetermined period of time and, opening the valve for another predetermined period of time before reinitiating operation of the auxiliary compressor.

8. An air conditioner comprising a plurality of high pressure shell type compressors comprising a variable speed compressor to operate continuously during an air conditioning operation of the air conditioner and a constant speed compressor to operate in parallel with the variable speed compressor if necessary during the air conditioning operation, the air conditioner further comprising a bypass tube to connect a suction tube connected to a shell of the variable speed compressor and a shell of the constant speed compressor and an opening/closing valve arranged at an intermediate portion of the bypass tube to open and close the bypass tube.

9. The air conditioner according to claim 8 further comprising a controller to perform control operations to open the opening/closing valve when the constant speed compressor is to be operated and then to operate the constant speed compressor.

10. The air conditioner according to claim 8 further comprising a controller to perform control operations to stop the constant speed compressor after the variable speed compressor and the constant speed compressor operate continuously in parallel for a time (T) to open the opening/closing valve simultaneously with the stopping of the constant speed compressor and then to again operate the constant speed compressor after closing the opened opening/closing valve.
